# EUROPÄISCHE PATENTANMELDUNG

(11) **EP 2 881 302 A1**
(43) Veröffentlichungstag der Anmeldung: **10.06.2015**
(21) Anmeldenummer: 13195609.6
(22) Anmeldetag: 04.12.2013
(51) Int. Cl.: B61D 25/00, B60J 1/20, B60J 3/00

(54) **Schienenfahrzeug mit selektiver Außenbeschattung**

(71) Anmelder: Siemens AG Österreich, 1210 Wien (AT)
(72) Erfinder: Bachmayer, Thomas, 1210 Wien (AT)
(74) Vertreter: Maier, Daniel Oliver

(57) **Zusammenfassung**

Schienenfahrzeug mit Seitenfenster (3) im Fahrgastraum (13), **wobei** jedem Seitenfenster (3) eine semitransparente Außenabschattung (2) zugeordnet ist, die an der Außenseite des Schienenfahrzeugs (1) angeordnet ist.

## Beschreibung

### Technisches Gebiet

Die Erfindung betrifft ein Schienenfahrzeug mit Seitenfenster im Fahrgastraum.

### Stand der Technik

Wenn Schienenfahrzeuge in subtropischen oder tropischen Klimazonen eingesetzt werden, trägt der solare Energieeintrag durch die Fenster erheblich zu einer unerwünschten Erwärmung des Fahrgastraums bei. Die Klimatisierung des Fahrgastraums auf einen von den Passagieren als angenehm empfundenen Temperaturbereich erfordert eine groß dimensionierte Klimaanlage mit entsprechend hohem Energieverbrauch.

Um bei einem Einsatzort mit hoher Sonneneinstrahlung den Energieeintrag durch die Seitenfenster zu verringern, sind bei Schienenfahrzeugen Rollo-Systeme bekannt, die an der Innenseite der Seitenfenster angeordnet sind. Damit wird zwar eine Abschattung erreicht, nicht aber eine befriedigende Reduktion des Energieeintrags.

### Darstellung der Erfindung

Es ist eine Aufgabe der vorliegenden Erfindung ein Schienenfahrzeug anzugeben, bei dem der solare Energieeintrag durch die Seitenfenster möglichst gering ist.

Gelöst wird diese Aufgabe durch ein Schienenfahrzeug mit den Merkmalen des Anspruchs 1. Vorteilhafte Ausgestaltungen der Erfindung sind in abhängigen Ansprüchen definiert.

Gemäß einem Grundgedanken der Erfindung wird der solare Energieantrag durch eine außenseitig angebrachte semitransparente Außenabschattung reduziert. Semitransparent heißt, dass die Durchsichtigkeit vom Fahrgastraum nach außen verringert ist, gleichzeitig aber erreicht wird, dass der solare Energieeintrag vermindert wird. Die semitransparente Außenabschattung ist ein flächenförmiges Gebilde, das sich aus opaken und transparenten Flächenabschnitten zusammensetzt, ist also "halbdurchsichtig". Die opaken, d.h. nicht durchsichtigen Flächenabschnitte weisen an ihrer vom Fenster abgewandten Seite eine Reflexionsschicht auf, welche einfallende Sonnenstrahlen zumindest teilweise in den Außenraum reflektieren. Da Reflexion bzw. Absorption in einem Abstand zum Fenster stattfindet, ist der Wärmeeintrag in den Fahrgastraum geringer. Das flächenförmige Gebilde fungiert also zunächst als Träger für eine Reflexionsschicht und kann unterschiedlich ausgeführt sein, zum Beispiel als starre Plexiglas-Scheibe oder Glasscheibe, die mit einer Folie beklebt ist. Die Folie kann eine polarisierende Folie sein. Die Außenabschattung kann aber auch flexibel ausgebildet sein, zum Beispiel ein Netz, ein Gewebe, oder eine durchgängige Materialschicht.

Eine starke Verringerung des solaren Energieeintrags lässt sich insbesondere dann erreichen, wenn die semitransparente Außenabschattung in einem Abstand zur Außenfläche eines Seitenfenster angeordnet ist, wobei der dadurch gebildete Zwischenraum mit jeweils zumindest einer Lufteintrittsöffnung und Luftaustrittsöffnung versehen ist. Durch geeignete Anordnung der Lufteintritts- bzw. Luft-Austrittsöffnungen kann zum einen erreicht werden, dass der Fahrtwind den Zwischenraum belüftet. Die erzwungene Luftströmung sorgt dafür, dass weniger Wärme in den Innenraum des Schienenfahrzeugs gelangt. Auch bei einem Stillstand des Schienenfahrzeugs kann durch den belüfteten Zwischenraum erreicht werden, dass im Zwischenraum hoch steigende Luft zumindest einen Teil der durch die Sonneneinstrahlung hervorgerufenen Erwärmung wieder nach außen transportiert.

Wie bereits gesagt, kann die semitransparente Abschattung ein fix montierter plattenförmiger Teil sein, oder aber auch flexibel, z.B. als Rollo ausgeführt sein. In beiden Fällen erscheint es günstig, wenn die Außenabschattung nicht von der Silhouette des Fahrzeugs übersteht, sondern bündig in die Außenhaut des Schienenfahrzeugs übergeht.

In einer bevorzugten Ausführungsform kann also vorgesehen sein, dass die Außenabschattung aus einer Platte oder Folie gebildet ist, die durch Abstandshalter bündig mit der Fahrzeugsilhouette gehalten ist. Wenn die Abstandshalter durch Schrauben gebildet sind, so ist die Außenabschattung auch leicht demontierbar. Je nach Einsatzort des Schienenfahrzeugs kann dann ein Sommer- und Winterbetrieb realisiert werden, d.h. im Sommer ist der Zwischenraum belüftet, im Winter nicht. Ebenso kann im Sommer und im Winter jeweils eine hinsichtlich der Reflexionseigenschaften und Durchlässigkeitseigenschaften unterschiedliche semitransparente Außenabschattung verwendet werden.

Eine andere bevorzugte Ausführungsform kann so ausgeführt sein, dass die einem Seitenfenster zugeordnete semitransparente Außenabschattung durch ein Rollo-System gebildet ist. Das Rollo-System weist zumindest eine Rollo-Welle auf, von der ausgehend von einem Stauzustand zum Zweck der Abschattung eines Seitenfensters ein semitransparentes Flächengebilde abwickelbar ist. Das Flächengebilde kann ein Kunststoffgitter, ein Textil, eine Folie oder ein Vlies sein.

Um den Abschattungseffekt variabel zu gestalten, zum Beispiel an die Intensität der Sonneneinstrahlung anpassen zu können, kann es günstig sein, wenn das Rollo-System zwei an gegenüberliegenden Seiten eines Seitenfenster angeordnete Rollo-Wellen aufweist. Je nachdem, welche Abschnitt der auf den beiden Rollo-Wellen aufgewickelten, mit unterschiedlicher Transparenz ausgebildeten Materialbahn zum Zwecke der Abschattung zum Einsatz kommt, kann eine starke oder weniger starke Abschattung eingestellt werden. Die Betätigung der Rollo-Wellen kann vorteilhaft durch ein elektrisches Antriebssystem gesteuert sein, welcher die Abschattung automatisch, je nach Sonnenstand vorgibt, zum Beispiel hohe Undurchsichtigkeit bei einem Höchststand der Sonne mittags.

Es kann auch eine Ausführung günstig sein, bei der das Flächengebilde durch zwei einander gegenüberliegende, rechtwinkelig zur Achse der Rollo-Welle angeordnete Führungsleisten geführt ist, wobei die Führungsleisten mit der Außenhaut des Schienenfahrzeugs bündig angeordnet sind. Dadurch wird erreicht, dass die Materialbahn dem Fahrtwind besser standhält.

Die semitransparente Außenabschattung kann vorteilhaft als Werbefläche verwendet werden. Dies kann beispielsweise dadurch erreicht werden, indem der als Platte oder Materialbahn fungierende Träger mit Pixel oder Rasterpunkten in Form eines zusammengesetzten Druckrasters bedruckt ist.

Als Werkstoff für die Materialbahn ist insbesondere ein Polymer-Werkstoff aufgrund seiner Flexibilität besonders geeignet.

### Kurzbeschreibung der Zeichnung

Zur weiteren Erläuterung der Erfindung wird im nachfolgenden Teil der Beschreibung auf Zeichnungen Bezug genommen, in denen weitere vorteilhafte Ausgestaltungen, Einzelheiten und Weiterbildungen der Erfindung anhand nicht einschränkender Ausführungsbeispiele zu entnehmen sind.
Es zeigen:
- Figur 1: einen schematischen Teilquerschnitt durch den Fahrgastraum eines Schienenfahrzeugs mit einem Fenster, das gemäß der Erfindung außen von einer semitransparenten Außenabschattung abgedeckt ist;
- Figur 2: eine Ausführung der Erfindung, bei der die semitransparente Abschattung als Rollo ausgebildet ist, wobei die Rollo vertikal an einer Fensterseite angebracht ist;
- Figur 3: eine andere Ausführungsform der Erfindung, bei der die als Rollo-System ausgebildete semitransparente Abschattung an eine Oberkante des Fensters angebracht ist;
- Figur 4: eine zu Figur 1 andere Ausgestaltung der Erfindung, bei der ein Rollo-System mit zwei Rollo-Wellen verwendet wird.

### Ausführung der Erfindung

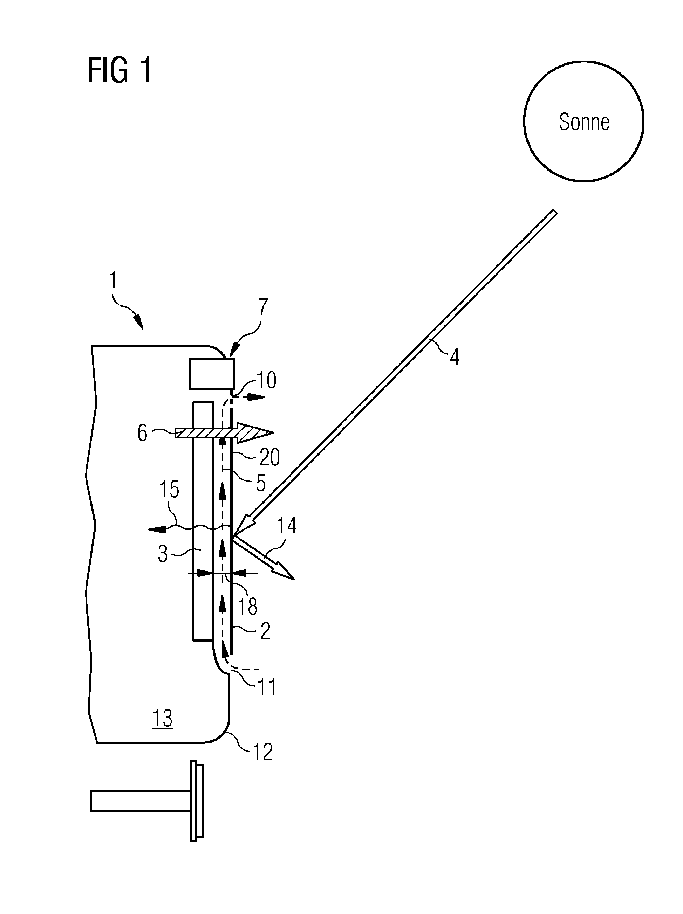

Die Figur 1 zeigt in einer stark schematisierten Darstellung einen Teilquerschnitt durch den Fahrgastraum 13 eines Schienenfahrzeugs 1. An einer Seitenwand ist ein Fenster 3 angeordnet, das an der Außenseite in einem Abstand 18 zum Fenster 3 durch eine semitransparente Außenabschattung 2 abgedeckt ist. Die Außenabschattung 2 ist flächenförmig ausgebildet und besteht aus opaken und transparenten Abschnitten. Die opaken, d.h. nicht durchsichtigen Flächenabschnitte sind so ausgebildet, dass darauf einfallende Sonnenstrahlen 4 nicht in den Fahrgastinnenraum 13 gelangen, sondern reflektiert werden (Pfeil 14). Die Außenabschattung ist so ausgeführt, dass gemäß dem Pfeil 6 eine Durchsicht für Fahrgäste möglich ist, gleichzeitig der Fahrgastinnenraum 13 aber selektiv von Sonnenlicht abgeschattet wird. Zwischen dem Fenster 3 und der Außenabschattung 2 ist ein Zwischenraum 5 vorgesehen. Dieser Zwischenraum 5 ist belüftet. Die Belüftung ist so ausgestaltet, dass der Fahrtwind durch diesen Zwischenraum hindurch streicht. Bei Stillstand des Fahrzeugs 1 kann Luft an der Unterseite des Fensters 2 durch die Öffnung 11 eintreten und durch die Luft- Austrittsöffnung 10 an der Oberseite wieder austreten. Dadurch wird auch bei einem Stationsaufenthalt des Schienenfahrzeugs ein Kühleffekt erreicht. Der Fahrgastinnenraum 13 wird dadurch weniger stark durch einfallende Sonnenstrahlen (siehe Pfeil 15 in Figur 1) erwärmt, wodurch der Energieaufwand für die Klimatisierung geringer ist. In der in Figur 1 skizzierten Ausgestaltung der Erfindung, besteht die Außenabschattung 2 aus einem Rollo-System 7. das Rollo-System 7 besteht im Wesentlichen aus einer nicht näher dargestellten Wickelrolle, auf der eine bandförmige flexible Außenabschattung gewickelt ist. Zum Beispiel angetrieben von einem Motor und Seitenführungen, die in Figur 1 nicht näher dargestellt sind, kann die als Materialbahn 20 ausgebildete Außenabschattung 2 herunter und wieder hochgefahren werden. Dies hat den Vorteil, dass der Effekt der Abschattung von einer automatischen Steuerung vorgegeben werden kann, zum Beispiel je nach Sonnenstand. Bei manueller Betätigung kann die Außenabschattung 2 des Schienenfahrzeugs 1 zum Beispiel saisonal beziehungsweise tagesaktuell angepasst werden. Wie in Figur 1 dargestellt, ist die semitransparente Außenabschattung 2 bündig mit der Außenhaut 12 des Schienenfahrzeugs 1.

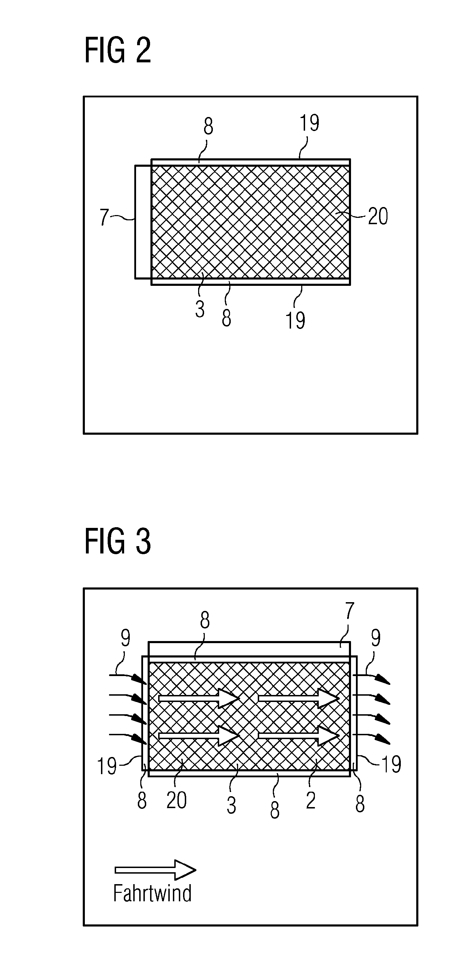

Die beiden Figuren 2 und 3 zeigen unterschiedliche Anordnungen des Rollo-Systems 7 in einer Draufsicht auf die Seitenwand eines Schienenfahrzeugs. In Figur 2 ist die Wickelrolle des Rollo-Systems 7 an einer Seite des Fensters 2 angeordnet. In Figur 3 ist die Wickelrolle des Rollo-Systems 7 an einer oberen Seite des Fensters 3 angeordnet. Mit den Pfeilen 9 ist der Fahrtwind angedeutet, der in Figur 3 von links her durch eine Luft-Eintrittsöffnung 8 eintritt, den Zwischenraum 5 durchströmt und an einer Luft-Austrittsöffnung 8 wieder austritt. Dadurch wird ein Kühleffekt erreicht. Die Materialbahn des Rollo-Systems ist in den in Figur 2 und 3 dargestellten Ausführungsbeispielen als Netz ausgebildet. Die Materialbahn 20 ist seitlich in Führungsleisten 19 geführt.

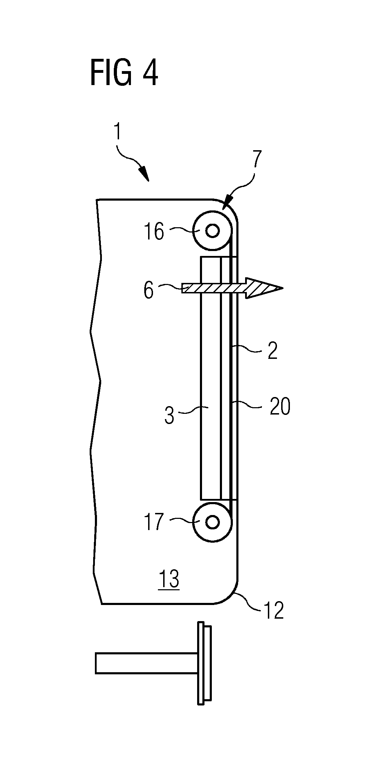

Figur 4 zeigt eine andere Ausgestaltung der Erfindung, bei der das Rollo-System 7 eine erste, obere Rollo-Welle 16 und eine zweite, untere Rollo-Welle 17 aufweist. Dadurch ist es möglich, den Grad der Abschattung zu variieren, je nachdem welches Materialstück der Bahn 20 zum Abdecken der Fensterfläche 3 verwendet wird. Die beiden Wellen 16, 17 werden von einem elektrischen Antrieb angetrieben, der von einem nicht näher dargestellten übergeordneten Steuersystem des Schienenfahrzeugs angesteuert wird. Selbstverständlich können die Rollo-Wellen 16 und 17 auch anders angeordnet oder manuell betätig sein, so dass die Materialbahn nicht vertikal, sondern in horizontaler Richtung gewickelt wird.

Ein wesentlicher Vorteil der Erfindung ist darin zu sehen, dass durch vergleichsweise einfache Mittel der solare Energieeintrag in den Fahrgastraum 13 eines Schienenfahrzeugs 1 verringert werden kann. Ein wesentlicher Gesichtspunkt ist dabei, dass bei einem Einsatz des Schienenfahrzeugs 1 in subtropischen oder tropischen Klimazonen die Klimaanlage des Schienenfahrzeugs kostengünstiger und sparsamer ausgeführt werden kann. Für den Betreiber des Schienenfahrzeugs fallen geringere Energie- und Betriebskosten an.

Ein weiterer Vorteil ist darin zu sehen, dass die semitransparente selektive Außenabschattung mit Vorteil als Werbefläche genutzt werden kann. Dabei ist die Werbefläche nicht auf die Fenstergröße beschränkt, sondern kann im Falle der Ausführung mit zwei Rollo-Wellen entsprechend der Länge der aufgewickelten, flexiblen Materialbahn unterschiedliche Werbeinhalte aufweisen.

Obwohl die Erfindung im Detail durch die oben als bevorzugt dargestellten Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

### Zusammenstellung der verwendeten Bezugszeichen

- 1: Schienenfahrzeug
- 2: semitransparente Außenabschattung
- 3: Fenster
- 4: Sonnenstrahlen
- 5: Zwischenraum
- 6: Durchsicht
- 7: Rollo-System
- 8: Luftöffnung
- 9: Fahrtwind
- 10: Luft-Austrittsöffnung
- 11: Öffnung
- 12: Außenhaut
- 13: Fahrgastraum
- 14: reflektierte Sonnenstrahlen
- 15: Pfeil
- 16: erste Rollo-Welle
- 17: zweite Rollo-Welle
- 18: Abstand
- 19: Führungsleisten
- 20: flächenförmiges Gebilde, Materialbahn

## Patentansprüche

1. Schienenfahrzeug mit Seitenfenster (3) im Fahrgastraum (13), **dadurch gekennzeichnet, dass** jedem Seitenfenster (3) eine semitransparente Außenabschattung (2) zugeordnet ist, die an der Außenseite des Schienenfahrzeugs (1) angeordnet ist.

2. Schienenfahrzeug nach Anspruch 1, **dadurch gekennzeichnet, dass** die Außenabschattung (2) in einem Abstand (18) zur Außenfläche eines Seitenfenster (3) angeordnet ist, wobei der dadurch gebildete Zwischenraum (5) mit jeweils zumindest einer Lufteintrittsöffnung (11) und Luftaustrittsöffnung (10) versehen ist.

3. Schienenfahrzeug nach Anspruch 2, **dadurch gekennzeichnet, dass** die jeweils einem Seitenfenster (3) zugeordnete semitransparente Außenabschattung (2) ein von Abstandshaltern gehaltenes starre Platte ist, welche mit der Außenhaut (12) des Schienenfahrzeugs (1) bündig ineinander übergehende angeordnet ist.

4. Schienenfahrzeug nach Anspruch 2, **dadurch gekennzeichnet, dass** die einem Seitenfenster (3) zugeordnete semitransparente Außenabschattung (2) durch ein Rollo-System (7) gebildet ist, umfassend zumindest eine Rollo-Welle (16, 17), von der ausgehend von einem Stauzustand zum Zweck der Abschattung eines Seitenfenster (3) ein semitransparentes Flächengebilde (20) abwickelbar ist.

5. Schienenfahrzeug nach Anspruch 4, **dadurch gekennzeichnet, dass** in einer Betriebsstellung das Flächengebilde (20) ein zugeordnetes Seitenfenster (3) vollständig abdeckt und mit der Außenhaut (12) des Schienenfahrzeugs bündig angeordnet ist.

6. Schienenfahrzeug nach Anspruch 4, **dadurch gekennzeichnet, dass** das Rollo-System (7) zwei an gegenüberliegenden Seiten eines Seitenfenster (3) angeordnete Rollo-Wellen (16, 17) aufweist.

7. Schienenfahrzeug nach einem der Ansprüche 4-6, **dadurch gekennzeichnet, dass** das Flächengebilde (20) durch zwei einander gegenüberliegende, rechtwinkelig zur Achse der Rollo-Wellen (16, 17) angeordnete Führungsleisten (19) geführt ist, wobei die Führungsleisten (19) mit der Außenhaut (12) des Schienenfahrzeugs (1) bündig angeordnet sind.

8. Schienenfahrzeug nach Anspruch 3, **dadurch gekennzeichnet, dass** die Transparenz des Flächengebildes (20) über die Fläche gesehen unterschiedlich ist.

9. Schienenfahrzeug nach Anspruch 8, **dadurch gekennzeichnet, dass** durch die unterschiedliche Transparenz des Flächengebildes (20) ein Muster ausgebildet ist.

10. Schienenfahrzeug nach Anspruch 3 oder 4, **dadurch gekennzeichnet, dass** das Flächengebilde (20) aus einem Kunststoff hergestellt ist.
